# EUROPÄISCHE PATENTSCHRIFT

(11) **EP 3 599 129 B1**
(45) Veröffentlichungstag und Bekanntmachung des Hinweises auf die Patenterteilung: **09.11.2022**
(21) Anmeldenummer: 19187843.8
(22) Anmeldetag: 23.07.2019
(51) Int. Cl.: B60N 3/00, B64D 11/06, A47B 5/00

(54) **TISCHVORRICHTUNG FÜR EIN KRAFTFAHRZEUG**
TABLE DEVICE FOR A MOTOR VEHICLE
DISPOSITIF DE TABLE POUR UN VÉHICULE AUTOMOBILE

(30) Priorität: 25.07.2018 DE 102018117946
(43) Veröffentlichungstag der Anmeldung: 29.01.2020
(73) Patentinhaber: MAN Truck & Bus SE, 80995 München (DE)
(72) Erfinder: Röhler, Alexander, 07973 Greiz (DE)
(74) Vertreter: v. Bezold & Partner Patentanwälte - PartG mbB

(56) Entgegenhaltungen:
- EP-A1- 1 902 949
- DE-A1- 3 303 670
- DE-A1- 4 023 105
- DE-C2- 3 303 670

## Beschreibung

Die Erfindung betrifft eine Tischvorrichtung für ein Kraftfahrzeug, vorzugsweise ein Nutzfahrzeug.

Die DE 198 22 694 C5 offenbart einen Klapptisch für ein Fahrzeug mit einer Tischplatte, die aus einer Verstaustellung mit vertikaler oder steil geneigter Tischoberfläche in eine Gebrauchsstellung mit horizontaler Tischoberfläche bewegbar ist. Die Tischplatte wird zuerst aus ihrer Verstaustellung nach oben gezogen und dann um eine horizontale Schwenkachse in die Gebrauchsstellung geklappt, in der sie über eine die Tischplatte tragende Halterung übersteht. Die Tischplatte ist in der Verstaustellung in einem in der Halterung ausgebildeten Staufach versenkt, das an seinem oberen Ende eine Öffnung zum Herausziehen der Tischplatte aufweist.

Die DE 42 37 855 C1 betrifft einen Klapptisch für Nutzfahrzeuge mit einer Tischplatte, die in fahrzeugseitigen Halterungen um eine horizontale Schwenkachse aus einer Vertikalstellung in eine Horizontalstellung und umgekehrt schwenkbar ist. Die Tischplatte besteht aus zwei annähernd gleichen Plattenteilen, die um 180° zueinander aufgeklappt werden können. Die fahrzeugseitigen Halterungen sind so vertikal verschiebbar angeordnet, dass die Tischplatte mit aneinander angeklappten Plattenteilen in ihrer Vertikalstellung einerseits zur Schwenkbewegung in die Gebrauchslage freibeweglich oberhalb der Fahrzeugmittelkonsole steht und andererseits durch einen in der Mittelkonsole längsverlaufenden Öffnungsschlitz hindurch in diese vollständig einsenkbar ist.

Die DE 40 23 105 A1 offenbart einen Tisch für Fahrzeuge, mit einer ausklappbaren Tischplatte, die beidseitig mittels Führungsgliedern längs Führungen verschiebbar geführt und relativ zu diesen schwenkbar ist. An den Führungsgliedern greift eine Kraftübertragungseinrichtung an. Die Kraftübertragungseinrichtung weist zumindest einen Kraftspeicher und zumindest ein kraftübertragendes Übertragungsmittel auf, das an dem Kraftspeicher und einem Führungsglied derart angreift, dass der Kraftspeicher beim Einklappen der Tischplatte in ihre Ruhestellung vorspannbar und als Dämpfer wirksam ist und beim Ausklappen der Tischplatte in ihre Gebrauchsstellung entspannbar und als zusätzliche Ausklapphilfe wirksam ist.

Die DE 33 03 670 A1 offenbart einen ausziehbaren Tisch mit einer geteilten, auf einer Hohlsäule verschiebbar gelagerten Tischplatte und mindestens einem Zusatzplattenelement, das bei Gebrauch zwischen die beiden Tischplattenhälften eingefügt und bei Nichtgebrauch in das Innere der Hohlsäule einschiebbar ist. Innerhalb der Hohlsäule ist eine Führung für das Einschieben des bzw. der Zusatzplattenelemente vorgesehen. Die Führung weist ein Führungsprofil auf, auf welchem ein Führungswagen zur Aufnahme des bzw. der Zusatzplattenelemente längsverschiebbar gelagert ist. Dieser Führungswagen ist über zumindest ein Seil und eine Umlenkrolle mit einem Gegengewicht verbunden, welches zumindest annähernd das Gewicht von Führungswagen und Zusatzplattenelement(e) kompensiert.

Die EP 1 902 949 A1 offenbart eine Falttischanordnung aufweisend eine Trageinrichtung, einen Tischkasten zur Aufnahme einer Tischplatte in einer im Wesentlichen vertikalen Staustellung. Der Tischkasten ist höhenverstellbar an der Trageinrichtung angeordnet. Eine Tischplatte ist von einer im Wesentlichen vertikalen Staustellung in dem Tischkasten in eine im Wesentlichen horizontale Nutzstellung verstellbar. In der Nutzstellung stützt sich die Tischplatte mit ihrer Unterseite auf dem Tischkasten ab.

Der Erfindung liegt die Aufgabe zu Grunde, eine alternative und/oder verbesserte Tischvorrichtung für ein Kraftfahrzeug zu schaffen.

Die Aufgabe wird gelöst durch die Merkmale des Anspruchs 1. Vorteilhafte Weiterbildungen sind in den abhängigen Ansprüchen und der Beschreibung angegeben.

Die Tischvorrichtung (z. B. Kraftfahrzeug-Tischvorrichtung, vorzugsweise Hub-Klapptisch-Vorrichtung) ist für ein Kraftfahrzeug, vorzugsweise ein Nutzfahrzeug (z. B. Van, Omnibus, Reisebus, Campingfahrzeug, Lastkraftwagen usw.) ausgebildet (z. B. zum ortsfesten Einbauen in ein Kraftfahrzeug). Die Tischvorrichtung weist eine Tischplatte und ein Bewegungselement, vorzugsweise einen Schlitten, auf, an dem die Tischplatte (z. B stufenlos) klappbar angebracht ist (z. B. mittig). Die Tischvorrichtung weist eine Vertikalführung auf, an der das Bewegungselement (z. B. stufenlos) beweglich geführt ist. Die Tischvorrichtung weist eine Servounterstützungsvorrichtung (z. B. Servokinematik- und/oder Servohebelvorrichtung) auf, die mit dem Bewegungselement zum Verringern (z. B. zum Kompensieren) einer Kraft zum Bewegen und/oder Halten des Bewegungselements und der daran angebrachten Tischplatte (z. B. direkt oder indirekt) verbunden ist.

Die Tischvorrichtung bietet eine Vielzahl von Vorteilen. Die Servounterstützungsvorrichtung ermöglicht massive Tischkonstruktionen mit entsprechendem Gewicht für die Tischplatte, ohne dass ein Benutzer dieses Gewicht beim Verwenden der Tischkonstruktion spürt. Die Kinematik der Tischvorrichtung beeinträchtigt eine Beinfreiheit eines vor der Tischvorrichtung sitzenden Benutzers nicht. Insbesondere ermöglicht die Tischvorrichtung durch die Kombination von Klappbewegung und Vertikalbewegung, dass der Benutzer die Tischvorrichtung so zwischen einer Gebrauchsstellung und einer Nichtgebrauchsstellung bewegen kann, dass dessen Beinfreiheit nicht beeinträchtigt wird. Insbesondere kann die Tischplatte aus der Gebrauchsstellung zunächst nach oben, das heißt weg von den Beinen des Benutzers, geklappt werden. Die Tischplatte kann dann gemeinsam mit dem Bewegungselement vertikal nach unten bewegt werden. Die Tischplatte kann somit bodennah und platzsparend in der Nichtgebrauchsstellung verstaut werden.

In einem weiteren Ausführungsbeispiel weist die Servounterstützungsvorrichtung ein, vorzugsweise bewegbar geführtes (z. B. verschiebbares), Gegengewicht auf, das vorzugsweise mit dem Bewegungselement als Gegengewicht für das Bewegungselement und/oder die Tischplatte und/oder eine Klappvorrichtung, die die Tischplatte klappbar an dem Bewegungselement anbringt, verbunden ist.

In einer Weiterbildung weist die Servounterstützungsvorrichtung ferner einen Seilzug auf, der das Gegengewicht mit dem Bewegungselement verbindet.

In einem Ausführungsbeispiel ist der Seilzug als ein Flaschenzug (mit z. B. mindestens einer festen Rolle und/oder mindestens einer losen Rolle) ausgeführt.

In einem weiteren Ausführungsbeispiel weist der Seilzug eine lose Rolle auf, die vorzugsweise das Gegengewicht trägt (z. B. ist das Gegengewicht beispielsweise direkt an einer Lagerung der Rolle befestigt oder angebracht). Alternativ oder zusätzlich weist der Seilzug eine feste Rolle auf, die vorzugsweise ein am Bewegungselement befestigtes Seil zu dem Gegengewicht umlenkt.

In einem weiteren Ausführungsbeispiel weist der Seilzug ein Nylonseil auf.

In einem weiteren Ausführungsbeispiel sind der Seilzug und das Gegengewicht derart ausgebildet, dass eine Gewichtskraft des Bewegungselements und/oder der Tischplatte und/oder eine Klappvorrichtung kompensiert wird.

Vorzugsweise trägt das Bewegungselement die Tischplatte, zum Beispiel über eine Klappvorrichtung, die die Tischplatte klappbar an dem Bewegungselement anbringt.

In einem Ausführungsbeispiel ist die Tischplatte zum Einnehmen einer Gebrauchsstellung der Tischvorrichtung an dem Bewegungselement nach unten klappbar, vorzugsweise in eine im Wesentlichen horizontale Ausrichtung. Alternativ oder zusätzlich ist die Tischplatte zum Verlassen einer Gebrauchsstellung der Tischvorrichtung an dem Bewegungselement nach oben klappbar, vorzugsweise in eine im Wesentlichen vertikale oder steile Ausrichtung. Dadurch wird die Beinfreiheit des Benutzers, der vor der Tischvorrichtung sitzt, nicht beeinträchtigt.

In einem weiteren Ausführungsbeispiel ist die Tischplatte gleichzeitig an dem Bewegungselement klappbar und das Bewegungselement in der Vertikalführung beweglich. Somit müssen die Klappbewegung und die Vertikalbewegung nicht nacheinander durchgeführt werden, sondern können gleichzeitig, zum Beispiel mit teilweiser Überdeckung, durchgeführt werden.

In einem weiteren Ausführungsbeispiel ist die Vertikalführung als eine Vertikalgleitführung ausgebildet.

In einer Ausführungsform weist die Vertikalführung mindestens eine Vertikalführungsbahn, vorzugsweise zwei parallele Vertikalführungsbahnen, auf, in denen das Bewegungselement beweglich geführt ist (zum Beispiel mittels eines oder mehrerer Gleitelemente).

In einer weiteren Ausführungsform weist die Tischvorrichtung ferner eine Verriegelungsvorrichtung auf, die zum, vorzugsweise stufenlosen, Verriegeln einer Position des Bewegungselements ausgebildet ist. Damit kann die Tischplatte beispielsweise in einer vom Benutzer gewünschten Höhe in der Gebrauchsstellung fixiert werden.

In einer Weiterbildung weist die Verriegelungsvorrichtung ein elastisch beaufschlagtes, vorzugsweise federbeaufschlagtes, Eingriffselement, vorzugsweise einen Druckstift, auf. Das Eingriffselement ist zum Verriegeln einer (zum Beispiel Vertikal-) Position des Bewegungselements (zum Beispiel an der Vertikalführung) in Eingriff mit einer (z. B. vertikalen) Eingriffsnut bringbar.

In einer weiteren Ausführungsform ist die Verriegelungsvorrichtung (zum Beispiel das Eingriffselement) an dem Bewegungselement angebracht, vorzugsweise an einem Seitenarm des Bewegungselements.

Beispielsweise kann die Eingriffsnut parallel zu der Vertikalführung verlaufen, zum Beispiel an einer Seitenfläche eines Gestells, die an eine weitere Seitenfläche des Gestells winkelig (z. B. um 90°) angrenzt, an der die Vertikalführung angeordnet ist.

In einer Ausführungsvariante weist die Tischvorrichtung ferner ein Gestell auf. Vorzugsweise ist die Vertikalführung an dem Gestell angebracht oder darin integriert ist.

In einer Weiterbildung ist ein Gegengewicht in dem Gestell vertikal geführt, vorzugsweise mittels einer Gleitführung.

In einer weiteren Ausführungsvariante weist das Gestell einen Durchgang, vorzugsweise eine vertikale Längsöffnung, für einen Seilzug auf. Beispielsweise kann sich der Durchgang parallel zu der Vertikalführung erstrecken und/oder im Wesentlichen gleich lang wie die Vertikalführung sein. Zum Beispiel kann der Durchgang zwischen zwei Führungsbahnen der Vertikalführung angeordnet sein, zum Beispiel mittig zwischen den zwei Führungsbahnen.

In einer weiteren Ausführungsvariante ist das Gestell an einem Fahrzeugboden und/oder einer Seitenwand des Kraftfahrzeugs befestigbar. Zum Beispiel kann eine Befestigungsvorrichtung das Gestell an dem Fahrzeugboden befestigen, zum Beispiel durch Eingreifen in einen bodenseitigen Abschnitt der Eingriffsnut, die der Verriegelungsvorrichtung zugeordnet ist.

In einer weiteren Ausführungsvariante ist das Gestell als ein Hohlprofil (zum Beispiel Vertikal-Hohlprofil) ausgebildet.

In einer weiteren Ausführungsvariante ist eine Eingriffsnut, die einer Verriegelungsvorrichtung zugeordnet ist, an dem Gestell angebracht oder darin integriert.

In einem Ausführungsbeispiel ist das Bewegungselement in einer Nichtgebrauchsstellung der Tischvorrichtung unten und/oder bodenseitig in der Vertikalführung positioniert und/oder das Bewegungselement ist in einer Nichtgebrauchsstellung der Tischvorrichtung an einem Fahrzeugboden des Kraftfahrzeugs abgestützt oder abstützbar.

In einem weiteren Ausführungsbeispiel ist das Bewegungselement in einer Gebrauchsstellung der Tischvorrichtung oben und/oder bodenfern in der Vertikalführung positioniert.

In einem weiteren Ausführungsbeispiel ist die Tischplatte in einer Nichtgebrauchsstellung der Tischvorrichtung in eine im Wesentlichen vertikale oder steile Ausrichtung geklappt und/oder die Tischplatte ist in einer Gebrauchsstellung der Tischvorrichtung in eine im Wesentlichen horizontale Ausrichtung geklappt.

In einer Ausführungsform weist die Tischvorrichtung ferner eine Dämpfungsvorrichtung auf. Vorzugsweise ist die Dämpfungsvorrichtung dazu ausgebildet, ein Auftreffen des Bewegungselements auf einen Fahrzeugboden des Kraftfahrzeugs zu dämpfen und/oder das Bewegungselement und/oder die Tischplatte in einer Nichtgebrauchsstellung der Tischvorrichtung an einem Fahrzeugboden des Kraftfahrzeugs dämpfend abzustützen. Damit kann beispielsweise eine Beschädigung der Tischvorrichtung beim Überführen in die Nichtgebrauchsstellung sowie während einer holprigen Fahrt des Kraftfahrzeugs verhindert werden.

In einer Weiterbildung ist die Dämpfungsvorrichtung an dem Bewegungselement angebracht, vorzugsweise unten an dem Bewegungselement und/oder an einer Unterseite des Bewegungselements. Alternativ oder zusätzlich ist die Dämpfungsvorrichtung als ein elastisches Element (zum Beispiel ein Elastomer) ausgebildet, vorzugsweise als ein Hohlkammergummiprofil.

In einer weiteren Ausführungsvariante weist die Tischplatte ein Griffelement, vorzugsweise eine Griffmulde, auf, vorzugsweise an einer Unterseite der Tischplatte und/oder an einer dem Bewegungselement entgegengesetzten Seite der Tischplatte.

In einer weiteren Ausführungsvariante ist die Tischplatte mittels einer Klappvorrichtung (z. B. aufweisend eines oder mehrere Gelenkscharniere), vorzugsweise eine 90°-Klappvorrichtung (z. B. aufweisend eines oder mehrere 90°-Gelenkscharniere), klappbar an dem Bewegungselement angebracht.

Die Erfindung ist auch auf ein Kraftfahrzeug, vorzugsweise ein Nutzfahrzeug (z. B. Van, Omnibus, Reisebus, Campingfahrzeug, Lastkraftwagen usw.), vorzugsweise zur Personenbeförderung, gerichtet. Das Kraftfahrzeug weist eine Tischvorrichtung wie hierin offenbart auf. Vorzugsweise ist die Tischvorrichtung (zum Beispiel mittels des Gestells der Tischvorrichtung) in einem Innenraum des Kraftfahrzeugs an einem Fahrzeugboden des Kraftfahrzeugs und/oder einer Fahrzeugseitenwand des Kraftfahrzeugs befestigt.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer Tischvorrichtung gemäß einem Ausführungsbeispiel der vorliegenden Offenbarung in einer Gebrauchsstellung;
- Figur 2: eine perspektivische Ansicht der beispielhaften Tischvorrichtung in einer Nichtgebrauchsstellung;
- Figur 3: eine Seitenansicht der beispielhaften Tischvorrichtung in der Gebrauchsstellung;
- Figur 4: eine weitere Seitenansicht der beispielhaften Tischvorrichtung in der Nichtgebrauchsstellung;
- Figur 5: eine Draufsicht auf die beispielhafte Tischvorrichtung in der Gebrauchsstellung;
- Figur 6: eine Ansicht von vorne auf die beispielhafte Tischvorrichtung in der Gebrauchsstellung; und
- Figur 7: eine Schnittansicht durch die beispielhafte Tischvorrichtung entlang einer Linie A-A in Figur 6.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

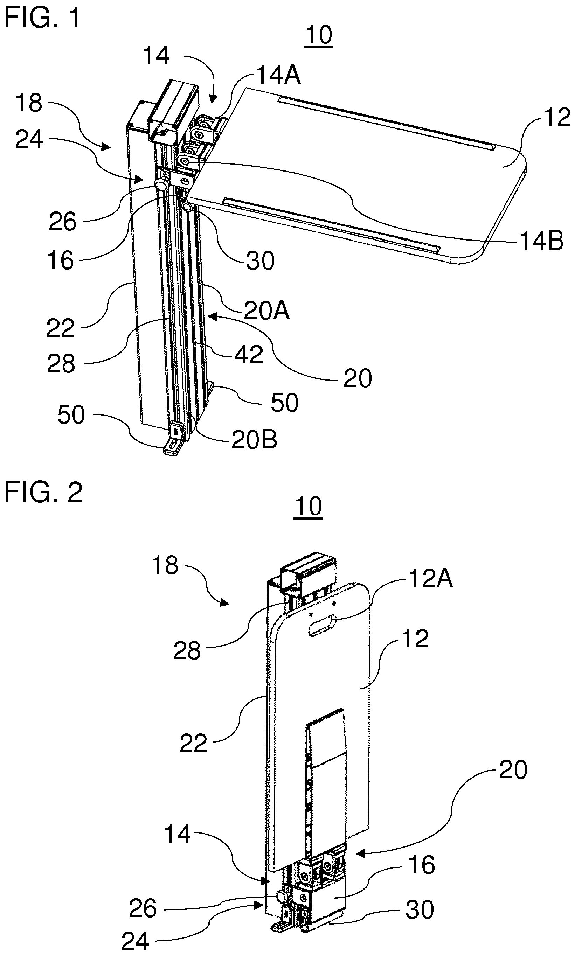

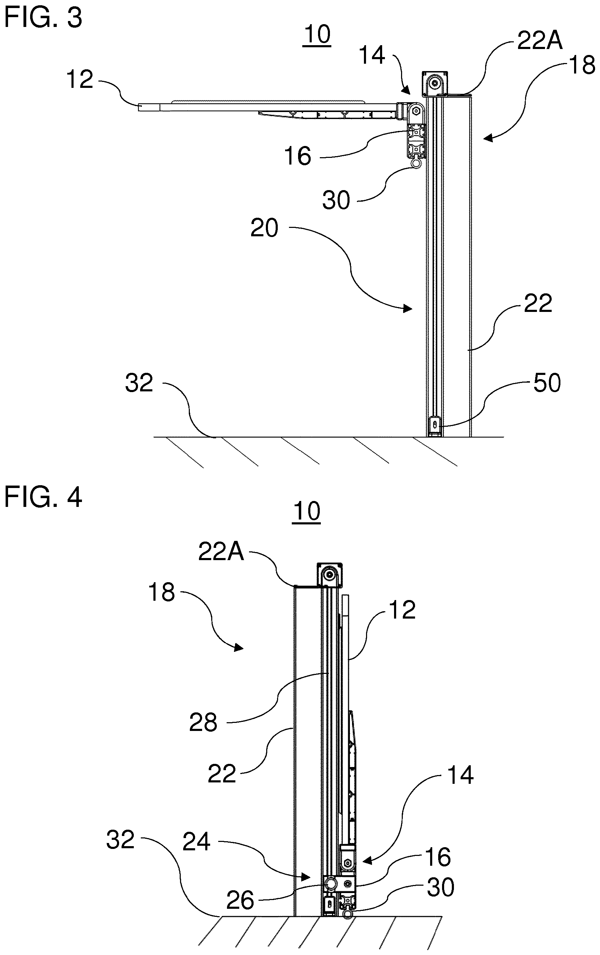

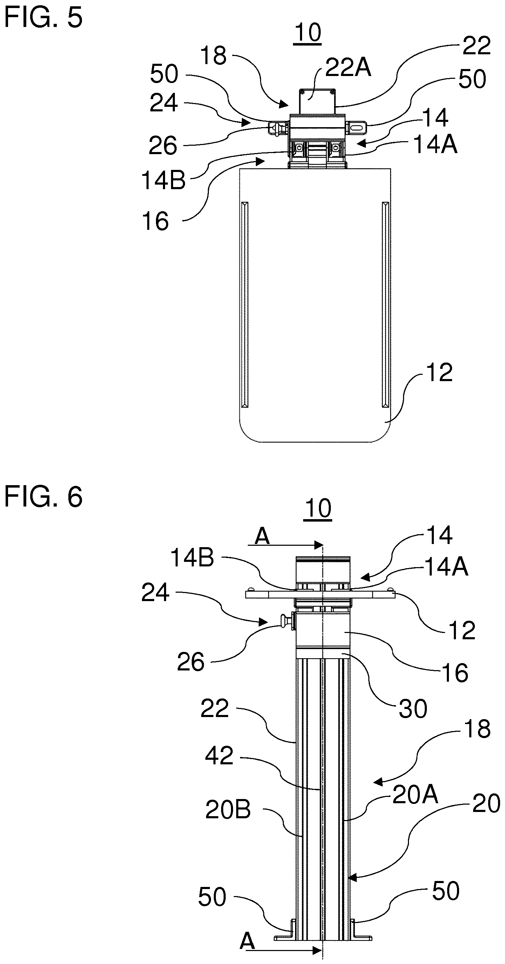

Die Figuren 1 bis 7 zeigen eine beispielhafte Tischvorrichtung 10 gemäß einem Ausführungsbeispiel der vorliegenden Offenbarung. Die Tischvorrichtung 10 ist zum Einbau in ein Kraftfahrzeug, vorzugsweise in einen Kraftfahrzeuginnenraum des Kraftfahrzeugs, ausgebildet. Die Tischvorrichtung 10 kann beispielsweise in einem Omnibus, einem Reisebus, einem Van, einem Campingfahrzeug usw. eingebaut sein. Die Tischvorrichtung 10 kann vorzugsweise vor einem Passagiersitz angeordnet sein. Ein auf dem Passagiersitz sitzender Passagier des Kraftfahrzeugs kann die Tischvorrichtung 10 bedienen und nutzen. Hierbei wird eine Beinfreiheit des Passagiers beim Wechsel zwischen Gebrauchsstellung der Tischvorrichtung 10 und Nichtgebrauchsstellung der Tischvorrichtung 10 nicht beeinträchtigt.

Die Tischvorrichtung 10 weist eine Tischplatte 12, eine Klappvorrichtung 14, ein Bewegungselement 16 und eine Servounterstützungsvorrichtung 18 auf.

Die Tischplatte 12 dient zum Ablegen und Tragen von Gegenständen. Die Tischplatte 12 ist flächig ausgebildet. Die Tischplatte 12 kann im Wesentlichen eine Rechteckform aufweisen, zum Beispiel mit zumindest teilweise abgerundeten Enden.

Die Tischplatte 12 ist mittels der Klappvorrichtung 14 klappbar an dem Bewegungselement 16 angebracht. Vorzugsweise ist die Klappvorrichtung 14 auf einer Oberseite des Bewegungselements 16 angeordnet. Die Klappvorrichtung 14 kann allerdings beispielsweise auch an eine an die Oberseite angrenzende Seitenfläche des Bewegungselements 16 montiert sein. Die Klappvorrichtung 14 ist ferner an eine Unterseite und/oder eine an die Unterseite angrenzende Seitenfläche (zum Beispiel Querseitenfläche) der Tischplatte 12 montiert.

Die Tischplatte 12 kann ein Griffelement 12A aufweisen. Das Griffelement 12A ist an einer Unterseite der Tischplatte 12 angeordnet. Das Griffelement 12A ist an einer Seite der Tischplatte 12 entgegengesetzt zu der Klappvorrichtung 14 und dem Bewegungselement 16 angeordnet. Das Griffelement 12A kann insbesondere als eine Griffmulde ausgeführt sein, beispielsweise in Form einer Nut, zum Beispiel ein Rechtecknut bspw. mit abgerundeten Ecken. In der Nichtgebrauchsstellung ist das Griffelement 12A für einen Benutzer zugänglich. Der Benutzer kann in das Griffelement 12A eingreifen und die Tischplatte 12 zusammen mit der Klappvorrichtung 14 und dem Bewegungselement 16 nach oben ziehen.

Die Klappvorrichtung 14 ist vorzugsweise eine 90°-Klappvorrichtung. Die Klappvorrichtung 14 ermöglicht ein Klappen der Tischplatte 12 aus einer im Wesentlichen vertikalen Ausrichtung in eine im Wesentlichen horizontale Ausrichtung und zurück. In der horizontalen Ausrichtung können Gegenstände auf der Tischplatte 12 platziert werden, zum Beispiel in der Gebrauchsstellung. In der vertikalen Ausrichtung kann die Tischplatte 12 platzsparend positioniert sein, zum Beispiel in der Nichtgebrauchsstellung.

In der dargestellten Ausführungsform weist die Klappvorrichtung 14 zwei 90°-Gelenkscharniere 14A und 14B auf, die die Tischplatte 12 klappbar mit dem Bewegungselement 16 verbinden. Das Vorsehen der zwei Gelenkscharniere 14A, 14B ermöglicht beispielsweise das Abstützen von größeren Lasten auf der Tischplatte 12, zum Beispiel wenn sich ein Passagier auf der Tischplatte 12 abstützt. Die zwei Gelenkscharniere 14A, 14B sind nebeneinander angeordnet. Die zwei Gelenksscharniere 14A, 14B weisen eine gemeinsame horizontale Drehachse auf, um die die Tischplatte 12 klappbar ist. Es ist beispielsweise auch möglich, mehr oder weniger Gelenkscharniere vorzusehen.

Das Bewegungselement 16 trägt die Klappvorrichtung 14. Über die Klappvorrichtung 14 trägt das Bewegungselement 16 die Tischplatte 12. Die Tischplatte 12 ist kann über die Klappvorrichtung 14 gleichzeitig zu einer Bewegung des Bewegungselements 16 geklappt werden.

Das Bewegungselement 16 ist vertikal beweglich, vorzugsweise stufenlos. Das Bewegungselement 16 ist mittels einer Vertikalführung 20 in einer Vertikalrichtung geführt. Die Vertikalführung 20 ist als eine Gleitführung ausgebildet. Die Vertikalführung 20 kann auch auf andere Weise insbesondere als Linearführung ausgebildet sein, zum Beispiel als Rollenführung, zum Beispiel mittels Rollen usw.. Vorzugsweise ist das Bewegungselement 16 als ein in Vertikalrichtung gleitgeführter Schlitten ausgebildet.

Die Vertikalführung 20 weist zwei parallele Führungsbahnen 20A, 20B auf. Die parallelen Führungsbahnen 20A, 20B erstrecken sich längs eines Gestells 22 der Tischvorrichtung 10 bzw. sind in das Gestell 22 integriert. Gleitelemente (zum Beispiel Gleitschuhe) des Bewegungselements 16 greifen in die Führungsbahnen 20A, 20B zum Führen des Bewegungselements 16 in einer Vertikalrichtung, wahlweise nach oben oder nach unten, ein. Es ist auch möglich, dass beispielsweise mehr oder weniger Führungsbahnen vorgesehen sind.

Mittels der Vertikalführung 20 kann das Bewegungselement 16 zusammen mit der verbundenen Tischplatte 12 entlang des Gestells 22 verschoben werden. Das Bewegungselement 16 kann zum Beispiel für eine Nichtgebrauchsstellung der Tischvorrichtung 10 in einen unteren, bodennahen Bereich der Vertikalführung 20 verschoben werden. Das Bewegungselement 16 kann zum Beispiel auch für eine Gebrauchsstellung der Tischvorrichtung 10 in einen oberen, bodenfernen Bereich der Vertikalführung 20 verschoben werden.

Die Tischvorrichtung 10 kann zudem eine Verriegelungsvorrichtung 24 aufweisen. Die Verriegelungsvorrichtung 24 ist dazu ausgebildet, das Bewegungselement 16 in einer gewünschten Position zu verriegeln oder zu fixieren. Die Verriegelungsvorrichtung 24 kann ein Eingriffselement 26 und eine Eingriffsnut 28 aufweisen.

Das Eingriffselement 26 kann an dem Bewegungselement 16 angebracht sein, zum Beispiel an einem seitlichen Arm, der das Gestell 22 an einer Seite umgreift, wie dargestellt ist. Das Eingriffselement 26 kann elastisch beaufschlagt bzw. vorgespannt in Richtung zu der Eingriffsnut 28 sein. Das Eingriffselement 26 kann einen Griffbereich zum Greifen für einen Benutzer der Tischvorrichtung 10 aufweisen. Das Eingriffselement 26 kann beispielsweise als ein Druckstift ausgebildet sein.

Die Eingriffsnut 28 erstreckt sich vertikal entlang des Gestells 22. Die Eingriffsnut 28 erstreckt sich parallel zu den Führungsbahnen 20A, 20B. Die Eingriffsnut 28 erstreckt sich an einer Außenseitenfläche des Gestells 22, die dem Benutzer der Tischvorrichtung 10 oder dem entsprechenden Passagiersitz zugewandt ist.

Zum Freigeben des Bewegungselements 16 kann das Eingriffselement 26 aus der Eingriffsnut 28 von einem Benutzer gezogen werden. Zum Verriegeln oder Fixieren einer Position des Bewegungselements 16 kann das Eingriffselement 26 in die Eingriffsnut 28 eingreifen. Dies kann selbsttätig unter Wirkung der elastischen Vorspannung des Eingriffselements 26 geschehen, sobald der Benutzer das Eingriffselement 26 loslässt.

Die Tischvorrichtung 10 kann ferner eine Dämpfungsvorrichtung 30 aufweisen. Dämpfungsvorrichtung 30 kann beispielsweise an dem Bewegungselement 16 angeordnet sein. Vorzugsweise ist die Dämpfungsvorrichtung 30 an einer Unterseite des Bewegungselements 16 angeordnet.

Die Dämpfungsvorrichtung 30 ist vorzugsweise dazu ausgebildet, ein Auftreffen des Bewegungselements 16 auf einen Fahrzeugboden 32 zu dämpfen. In der Nichtgebrauchsstellung der Tischvorrichtung 10 stützt die Dämpfungsvorrichtung 30 zudem das Bewegungselement 16 und damit die Tischplatte 12 gedämpft am Fahrzeugboden 32 ab. Die Dämpfungsvorrichtung 30 kann ein elastisches Element aufweisen. Zum Beispiel kann die Dämpfungsvorrichtung 30 als ein Hohlprofilgummi ausgebildet sein. Beispielsweise kann sich das Hohlprofilgummi entlang einer Länge des Bewegungselements 16 erstrecken und/oder an einer Unterseite des Bewegungselements befestigt sein, zum Beispiel in einer Aufnahmenut.

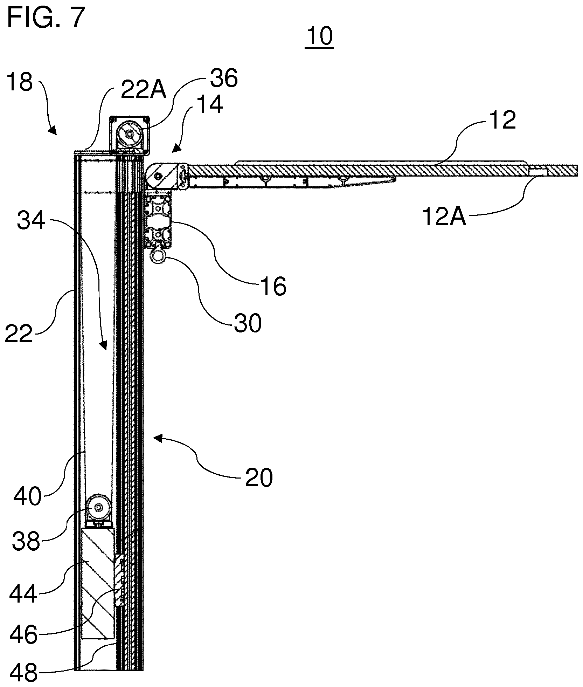

Die Servounterstützungsvorrichtung 18 ist dazu ausgebildet, eine zum Bewegen und/oder Halten des Bewegungselements 16 und der daran angebrachten Tischplatte 12 benötigte Kraft zu verringern. Die Servounterstützungsvorrichtung 18 kann mit dem Bewegungselement 16 und/oder der Tischplatte 12 verbunden sein. Beispielhaft ist nachfolgend unter Bezugnahme auf die Figur 7 ein Ausführungsbeispiel für die Servounterstützungsvorrichtung 18 beschrieben. Es wird jedoch darauf hingewiesen, dass die Servounterstützungsvorrichtung 18 beispielsweise auch auf andere Art und Weise ausgeführt sein kann, zum Beispiel mittels einer anderen Hebelvorrichtung, Servokinematik und/oder durch Verwendung eines Servomotors usw..

Die Servounterstützungsvorrichtung 18 weist einen Seilzug 34, insbesondere einen Flaschenzug, auf. Der Seilzug 34 weist eine feste, das heißt ortsfeste, Rolle 36 und eine lose, das heißt ortsveränderliche, Rolle 38 und ein Seil 40 auf.

Die feste Rolle 36 ist oberhalb des Gestells 22 in einem Gehäuse angeordnet. Die lose Rolle 38 ist innerhalb des Gestells 22, das vorzugsweise als ein Hohlprofil ausgebildet ist, ortsveränderlich angeordnet. Die Rollen 36, 38 können drehbar gelagert sein, zum Beispiel mittels Kugellager.

Das Seil 40 kann beispielsweise als ein Nylonseil ausgebildet sein. Das Seil 40 ist mit einem ersten Ende an dem Bewegungselement 16 befestigt. Von dem Bewegungselement 16 erstreckt sich das Seil 40 zu der festen Rolle 36. Das Seil 40 durchquert hierbei einen als vertikale Längsöffnung ausgebildeten Durchgang 42 im Gestell 22. Der Durchgang 42 erstreckt sich parallel zu den Führungsbahnen 20A, 20B, zum Beispiel mittig zwischen den Führungsbahnen 20A, 20B.

Die feste Rolle 36 lenkt das Seil 40 von dem Bewegungselement 16 zu der losen Rolle 38 um. Das Seil 40 erstreckt sich von der festen Rolle 36 zu der losen Rolle 38. Die lose Rolle 38 lenkt das Seil 40 von der festen Rolle 36 zu einer Befestigung eines zweiten Endes des Seils 40 in einem oberen Bereich des Gestells 22 um. Das Seil 40 erstreckt sich von der losen Rolle 38 zu der Befestigung im oberen Bereich des Gestells 22, zum Beispiel an oder nahe einer oberen Abdeckung oder eines Deckel 22A des Gestells 22.

Die lose Rolle 38 trägt ein Gegengewicht 44. Das Gegengewicht 44 ist so dimensioniert, dass es eine Kraft zum Bewegen der Tischplatte 12 und des Bewegungselements 16 spürbar verringert. Insbesondere ist das Gegengewicht 44 so dimensioniert, dass eine Gewichtskraft des Bewegungselements 16, der Klappvorrichtung 14 und der Tischplatte 12 durch das in den Flaschenzug integrierte Gegengewicht 44 annähernd oder im Wesentlichen vollständig kompensiert ist.

Das Gegengewicht 44 kann innerhalb des Gestells 22 vertikal geführt sein. Hierfür kann beispielsweise eine vertikale Gleitführung vorgesehen sein. Das Gegengewicht 44 kann ein Gleitelement (zum Beispiel Gleitschuhe) 46 aufweisen. Das Gleitelement 46 kann in einer inneren, vertikalen Führungsbahn 48 des Gestells 22 geführt sein. Es ist beispielsweise auch möglich, eine andere Führung für das Gegengewicht 44 und/oder die lose Rolle 38 vorzusehen, zum Beispiel eine Rollenführung. Es ist möglich, dass das Gleitelement 46 als Gleichteil zu den Gleitelementen des Bewegungselements 16 ausgebildet ist. Es ist auch möglich, dass die Führungsbahn 48 als Gleichteil zu den Führungsbahnen 20A, 20B ausgebildet ist.

Das Gestell 22 kann mittels einer Befestigungsvorrichtung 50 an dem Fahrzeugboden 32 befestigt sein. Die Befestigungsvorrichtung 50 kann beispielsweise in einen bodennahen Abschnitt der Eingriffsnut 28 zum Befestigen des Gestells 22 an dem Fahrzeugboden 32 eingreifen. Die Befestigungsvorrichtung 50 kann eines oder eine Mehrzahl von Befestigungselementen aufweisen, die das Gestell 22 am Fahrzeugboden 32 befestigen. In der dargestellten Ausführungsform sind beispielsweise zwei Befestigungselemente vorgesehen. Es ist auch möglich, insbesondere in Abhängigkeit vom Fahrzeugtyp des Kraftfahrzeugs, das Gestell 22 zusätzlich oder alternativ an einer im Wesentlichen vertikalen Seitenwand des Kraftfahrzeugs zu befestigen. Hierzu können entsprechende weitere Befestigungselemente vorgesehen sein.

Die Tischvorrichtung 10 gemäß der beispielhaft oben beschriebenen Ausführung kann bequem zwischen einer Nichtgebrauchsstellung und einer Gebrauchsstellung bewegt werden. Dadurch dass die Tischplatte 12 aus der Gebrauchsstellung nach oben geklappt wird, wird beim Bewegen in die Nichtgebrauchsstellung die Beinfreiheit des vor der Tischvorrichtung 10 sitzenden Benutzers nicht beeinträchtigt. Im Einzelnen ist das Bewegungselement 16 in der Nichtgebrauchsstellung unten, also bodennah, in der Vertikalführung 20 positioniert ist. Damit ist die Tischplatte 12 in der Nichtgebrauchsstellung ebenso bodennah positioniert. Das Bewegungselement 16 ist in einer Gebrauchsstellung der Tischvorrichtung oben, also bodenfern, in der Vertikalführung 20 positioniert. Damit ist die Tischplatte 12 in der Gebrauchsstellung ebenso bodenfern positioniert. Die Tischplatte 12 ist in der Nichtgebrauchsstellung in eine im Wesentlichen vertikale Ausrichtung geklappt und in der Gebrauchsstellung in eine im Wesentlichen horizontale Ausrichtung geklappt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Tischplatte, des Bewegungselements, der Vertikalführung und/oder der Servounterstützungsvorrichtung des unabhängigen Anspruchs 1 offenbart.

### Bezugszeichenliste

- 10: Tischvorrichtung
- 12: Tischplatte
- 12A: Griffelement
- 14: Klappvorrichtung
- 14A, 14B: Gelenkscharnier
- 16: Bewegungselement
- 18: Servounterstützung
- 20: Vertikalführung
- 20A, 20B: Führungsbahn
- 22: Gestell
- 22A: Deckel
- 24: Verriegelungsvorrichtung
- 26: Eingriffselement
- 28: Eingriffsnut
- 30: Dämpfungsvorrichtung
- 32: Fahrzeugboden
- 34: Seilzug
- 36: Feste Rolle
- 38: Lose Rolle
- 40: Seil
- 42: Durchgang
- 44: Gegengewicht
- 46: Gleitelement
- 48: Führungsbahn
- 50: Befestigungsvorrichtung

## Patentansprüche

1. Tischvorrichtung (10) für ein Kraftfahrzeug, vorzugsweise ein Nutzfahrzeug, aufweisend:
eine Tischplatte (12);
ein Bewegungselement (16), vorzugsweise einen Schlitten, an dem die Tischplatte (12) klappbar angebracht ist;
eine Vertikalführung (20), an der das Bewegungselement (16) beweglich geführt ist; und
eine Servounterstützungsvorrichtung (18), die mit dem Bewegungselement (16) zum Verringern einer Kraft zum Bewegen und/oder Halten des Bewegungselements (16) und der daran angebrachten Tischplatte (12) verbunden ist,
**dadurch gekennzeichnet, dass** die Servounterstützungsvorrichtung (18) ein, vorzugsweise bewegbar geführtes, Gegengewicht (44) aufweist, das mit dem Bewegungselement (16) als Gegengewicht für das Bewegungselement (16) und/oder die Tischplatte (12) verbunden ist; und
einen Seilzug (34) aufweist, der das Gegengewicht (44) mit dem Bewegungselement (16) verbindet, wobei der Seilzug (34) als ein Flaschenzug ausgeführt ist.

2. Tischvorrichtung (10) nach Anspruch 1, wobei:
der Seilzug (34) eine lose Rolle (38) aufweist, die das Gegengewicht (44) trägt; und/oder
der Seilzug (34) eine feste Rolle (36) aufweist, die ein am Bewegungselement (16) befestigtes Seil (40) zu dem Gegengewicht (44) umlenkt; und/oder
der Seilzug (34) ein Nylonseil aufweist; und/oder
der Seilzug (34) und das Gegengewicht (44) derart ausgebildet sind, dass eine Gewichtskraft des Bewegungselements (16) und/oder der Tischplatte (12) kompensiert wird.

3. Tischvorrichtung (10) nach einem der vorherigen Ansprüche, wobei:
die Tischplatte (12) zum Einnehmen einer Gebrauchsstellung der Tischvorrichtung (10) an dem Bewegungselement (16) nach unten klappbar ist, vorzugsweise in eine im Wesentlichen horizontale Ausrichtung; und/oder
die Tischplatte (12) zum Verlassen einer Gebrauchsstellung der Tischvorrichtung (10) an dem Bewegungselement (16) nach oben klappbar ist, vorzugsweise in eine im Wesentlichen vertikale oder steile Ausrichtung.

4. Tischvorrichtung (10) nach einem der vorherigen Ansprüche, wobei:
gleichzeitig die Tischplatte (12) an dem Bewegungselement (16) klappbar und das Bewegungselement (16) in der Vertikalführung (20) beweglich ist.

5. Tischvorrichtung (10) nach einem der vorherigen Ansprüche, wobei:
die Vertikalführung (20) als eine Vertikalgleitführung ausgebildet ist; und/oder
die Vertikalführung (20) mindestens eine Vertikalführungsbahn (20A, 20B), vorzugsweise zwei parallele Vertikalführungsbahnen (20A, 20B), aufweist, in denen das Bewegungselement (16) beweglich geführt ist.

6. Tischvorrichtung (10) nach einem der vorherigen Ansprüche, ferner aufweisend:
eine Verriegelungsvorrichtung (24), die zum, vorzugsweise stufenlosen, Verriegeln einer Position des Bewegungselements (16) ausgebildet ist.

7. Tischvorrichtung (10) nach Anspruch 6, wobei:
die Verriegelungsvorrichtung (24) ein elastisch beaufschlagtes, vorzugsweise federbeaufschlagtes, Eingriffselement (26), vorzugsweise einen Druckstift, aufweist, das in Eingriff mit einer Eingriffsnut (28) zum Verriegeln einer Position des Bewegungselements (16) bringbar ist; und/oder
die Verriegelungsvorrichtung (24) an dem Bewegungselement (16) angebracht ist, vorzugsweise an einem Seitenarm des Bewegungselements (16).

8. Tischvorrichtung (10) nach einem der vorherigen Ansprüche, ferner aufweisend:
ein Gestell (22), wobei:
die Vertikalführung (20) an dem Gestell (22) angebracht oder darin integriert ist; und/oder
ein Gegengewicht (44) in dem Gestell (22) vertikal geführt ist, vorzugsweise mittels einer Gleitführung (46, 48); und/oder
das Gestell (22) einen Durchgang (42), vorzugsweise eine vertikale Längsöffnung, für einen Seilzug (34) aufweist;
das Gestell (22) an einem Fahrzeugboden (32) und/oder einer Seitenwand des Kraftfahrzeugs befestigbar ist; und/oder
das Gestell (22) als ein Hohlprofil ausgebildet ist; und/oder
eine Eingriffsnut (28), die einer Verriegelungsvorrichtung (24) zugeordnet ist, an dem Gestell (22) angebracht oder darin integriert ist.

9. Tischvorrichtung (10) nach einem der vorherigen Ansprüche, wobei:
das Bewegungselement (16) in einer Nichtgebrauchsstellung der Tischvorrichtung (10) unten und/oder bodenseitig in der Vertikalführung (20) positioniert ist; und/oder
das Bewegungselement (16) in einer Nichtgebrauchsstellung der Tischvorrichtung (10) an einem Fahrzeugboden (32) des Kraftfahrzeugs abgestützt oder abstützbar ist; und/oder
das Bewegungselement (16) in einer Gebrauchsstellung der Tischvorrichtung (10) oben und/oder bodenfern in der Vertikalführung (20) positioniert ist;
die Tischplatte (12) in einer Nichtgebrauchsstellung der Tischvorrichtung (10) in eine im Wesentlichen vertikale oder steile Ausrichtung geklappt ist; und/oder
die Tischplatte (12) in einer Gebrauchsstellung der Tischvorrichtung (10) in eine im Wesentlichen horizontale Ausrichtung geklappt ist.

10. Tischvorrichtung (10) nach einem der vorherigen Ansprüche, ferner aufweisend:
eine Dämpfungsvorrichtung (30), die dazu ausgebildet ist:
ein Auftreffen des Bewegungselements (16) auf einen Fahrzeugboden (32) des Kraftfahrzeugs zu dämpfen; und/oder
das Bewegungselement (16) und/oder die Tischplatte (12) in einer Nichtgebrauchsstellung der Tischvorrichtung (10) an einem Fahrzeugboden (32) des Kraftfahrzeugs dämpfend abzustützen.

11. Tischvorrichtung (10) nach Anspruch 10, wobei:
die Dämpfungsvorrichtung (30) an dem Bewegungselement (16) angebracht ist, vorzugsweise unten an dem Bewegungselement (16) und/oder an einer Unterseite des Bewegungselements (16); und/oder
die Dämpfungsvorrichtung (40) als ein elastisches Element ausgebildet ist, vorzugsweise als ein Hohlkammergummiprofil.

12. Tischvorrichtung (10) nach einem der vorherigen Ansprüche, wobei:
die Tischplatte (12) ein Griffelement (12A), vorzugsweise eine Griffmulde, aufweist, vorzugsweise an einer Unterseite der Tischplatte (12) und/oder an einer dem Bewegungselement (16) entgegengesetzten Seite der Tischplatte (12); und/oder
die Tischplatte (12) mittels einer Klappvorrichtung (14), vorzugsweise eine 90°-Klappvorrichtung, klappbar an dem Bewegungselement (16) angebracht ist.

13. Kraftfahrzeug, vorzugsweise Nutzfahrzeug, aufweisend:
eine Tischvorrichtung (10) nach einem der vorherigen Ansprüche, wobei, vorzugsweise, die Tischvorrichtung (10) in einem Innenraum des Kraftfahrzeugs an einem Fahrzeugboden (32) des Kraftfahrzeugs und/oder einer Fahrzeugseitenwand des Kraftfahrzeugs befestigt ist.

## Claims

1. A table device (10) for a motor vehicle, preferably a commercial vehicle, having:
a table top (12);
a movement element (16), preferably a carriage, to which the table top (12) is fitted such that it can be folded;
a vertical guide (20), on which the movement element (16) is movably guided; and
a servo assistance device (18), which is connected to the movement element (16) to reduce the force for moving and/or holding the movement element (16) and the table top (12) attached thereto;
**characterized in that**
the servo assistance device (18) has
a preferably movably guided counterweight (44), which is connected to the movement element (16) as a counterweight for the movement element (16) and/or the table top (12); and
a pull cable (34), which connects the counterweight (44) to the movement element (16), wherein the pull cable (34) is designed as a block and tackle.

2. The table device (10) according to Claim 1, wherein:
the block and tackle (34) has a loose roller (38) which carries the counterweight (44); and/or
the block and tackle (34) has a fixed roller (36) which deflects a cable (40) fixed to the movement element (16) towards the counterweight (44); and/or
the block and tackle (34) has a nylon cord; and/or
the block and tackle (34) and the counterweight (44) are designed in such a way that a weight of the movement element (16) and/or the table top (12) is compensated.

3. The table device (10) according to either of the preceding claims, wherein:
the table top (12) can be folded down on the movement element (16), preferably into a substantially horizontal orientation, in order to assume an in-use position of the table device (10); and/or
the table top (12) can be folded upwards on the movement element (16), preferably into a substantially vertical or steep orientation, in order to leave an in-use position of the table device (10).

4. The table device (10) according to one of the preceding claims, wherein:
the table top (12) can be folded on the movement element (16) and the movement element (16) can be moved in the vertical guide (20) simultaneously.

5. The table device (10) according to one of the preceding claims, wherein:
the vertical guide (20) is designed as a vertical sliding guide; and/or
the vertical guide (20) has at least one vertical guide track (20A, 20B) preferably two parallel vertical guide tracks (20A, 20B), in which the movement element (16) is movably guided.

6. The table device (10) according to one of the preceding claims, also having:
a locking device (24), which is designed for the preferably stepless locking of a position of the movement element (16).

7. The table device (10) according to Claim 6, wherein:
the locking device (24) has an elastically loaded, preferably spring-loaded, engagement element (26), preferably a pressure pin, which can be brought into engagement with an engagement groove (28) to lock a position of the movement element (16); and/or
the locking device (24) is attached to the movement element (16), preferably to a side arm of the movement element (16).

8. The table device (10) according to one of the preceding claims, also having:
a frame (22), wherein:
the vertical guide (20) is attached to the frame (22) or integrated therein;
and/or
a counterweight (44) is guided vertically in the frame (22), preferably by means of a sliding guide (46, 48); and/or
the frame (22) has an aperture (42), preferably a vertical longitudinal opening, for a block and tackle (34);
the frame (22) can be fixed to a vehicle floor (32) and/or a side wall of the motor vehicle; and/or
the frame (22) is designed as a hollow profile; and/or
an engagement groove (28), which is assigned to a locking device (24), is attached to the frame (22) or integrated therein.

9. The table device (10) according to one of the preceding claims, wherein:
in a non-use position of the table device (10), the movement element (16) is positioned at the bottom and/or on the floor side in the vertical guide (20); and/or
in a non-use position of the table device (10), the movement element (16) is or can be supported on a vehicle floor (32) of the motor vehicle; and/or
in an in-use position of the table device (10), the movement element (16) is positioned at the top and/or remote from the floor in the vertical guide (20);
in a non-use position of the table device (10), the table top (12) is folded into a substantially vertical or steep orientation; and/or
in an in-use position of the table device (10), the table top (12) is folded into a substantially horizontal orientation.

10. The table device (10) according to one of the preceding claims, also having:
a damping device (30), which is designed:
to dampen an impact of the movement element (16) on a vehicle floor (32) of the motor vehicle; and/or
to support the movement element (16) and/or the table top (12) in a damping manner on a vehicle floor (32) of the motor vehicle in a non-use position of the table device (10).

11. The table device (10) according to Claim 10, wherein:
the damping device (30) is attached to the movement element (16), preferably to the bottom of the movement element (16) and/or to an underside of the movement element (16); and/or
the damping device (40) is designed as a resilient element, preferably as a hollow-chamber rubber profile.

12. The table device (10) according to one of the preceding claims, wherein:
the table top (12) has a handle element (12A), preferably a handle recess, preferably on an underside of the table top (12) and/or on a side of the table top (12) that is opposite to the movement element (16); and/or
the table top (12) is attached to the movement element (16) such that it can be folded by means of a folding device (14), preferably a 90° folding device.

13. A motor vehicle, preferably a commercial vehicle, having:
a table device (10) according to one of the preceding claims, wherein, preferably, the table device (10) is secured in an interior of the motor vehicle to a vehicle floor (32) of the motor vehicle and/or a vehicle side wall of the motor vehicle.

## Revendications

1. Dispositif de table (10) pour un véhicule automobile, de préférence un véhicule utilitaire, présentant :
un plateau de table (12) ;
un élément mobile (16), de préférence un chariot, sur lequel le plateau de table (12) est monté de manière rabattable ;
un guide vertical (20), sur lequel l'élément mobile (16) est guidé de manière mobile ; et
un dispositif de support asservi (18), qui est relié à l'élément mobile (16) pour réduire une force de déplacement et/ou de maintien de l'élément mobile (16) et du plateau de table (12) monté sur celui-ci,
**caractérisé en ce que**
le dispositif de support asservi (18) présente un contrepoids (44), de préférence guidé de manière déplaçable, qui est relié à l'élément mobile (16) en tant que contrepoids pour l'élément mobile (16) et/ou le plateau de table (12) ; et
présente un câble de traction (34) qui relie le contrepoids (44) à l'élément mobile (16), dans lequel le câble de traction (34) est réalisé sous la forme d'un palan.

2. Dispositif de table (10) selon la revendication 1, dans lequel :
le câble de traction (34) présente une poulie libre (38) qui porte le contrepoids (44) ; et/ou
le câble de traction (34) présente une poulie fixe (36) qui dévie un câble (40) fixé à l'élément mobile (16) vers le contrepoids (44) ; et/ou
le câble de traction (34) présente un câble en nylon ; et/ou
le câble de traction (34) et le contrepoids (44) sont configurés de telle sorte qu'une force massique de l'élément mobile (16) et/ou du plateau de table (12) est compensée.

3. Dispositif de table (10) selon l'une quelconque des revendications précédentes, dans lequel :
le plateau de table (12) est rabattable vers le bas sur l'élément mobile (16) pour prendre une position d'utilisation du dispositif de table (10), de préférence dans une orientation essentiellement horizontale ; et/ou
le plateau de table (12) est rabattable vers le haut sur l'élément mobile (16) pour quitter une position d'utilisation du dispositif de table (10), de préférence dans une orientation essentiellement verticale ou inclinée.

4. Dispositif de table (10) selon l'une quelconque des revendications précédentes, dans lequel :
simultanément, le plateau de table (12) peut être rabattu sur l'élément mobile (16) et l'élément mobile (16) est mobile dans le guide vertical (20).

5. Dispositif de table (10) selon l'une quelconque des revendications précédentes, dans lequel :
le guide vertical (20) est configuré sous la forme d'un guide à glissement vertical ; et/ou
le guide vertical (20) présente au moins une voie de guidage vertical (20A, 20B), de préférence deux voies de guidage vertical parallèles (20A, 20B), dans lesquelles l'élément mobile (16) est guidé de manière mobile.

6. Dispositif de table (10) selon l'une quelconque des revendications précédentes, présentant en outre :
un dispositif de verrouillage (24), qui est configuré pour verrouiller, de préférence en continu, une position de l'élément mobile (16).

7. Dispositif de table (10) selon la revendication 6, dans lequel :
le dispositif de verrouillage (24) présente un élément de mise en prise (26), de préférence une broche de pression, sollicité élastiquement, de préférence sollicité par ressort, qui peut être mis en prise avec une rainure de mise en prise (28) pour verrouiller une position de l'élément mobile (16) ; et/ou
le dispositif de verrouillage (24) est monté sur l'élément mobile (16), de préférence sur un bras latéral de l'élément mobile (16).

8. Dispositif de table (10) selon l'une quelconque des revendications précédentes, présentant en outre :
un châssis (22), dans lequel :
le guide vertical (20) est monté sur le châssis (22) ou intégré dans celui-ci ; et/ou
un contrepoids (44) est guidé verticalement dans le châssis (22), de préférence au moyen d'un guide à glissement (46, 48) ; et/ou
le châssis (22) présente un passage (42), de préférence une ouverture longitudinale verticale, pour un câble de traction (34) ;
le châssis (22) peut être fixé à un plancher de véhicule (32) et/ou à une paroi latérale du véhicule automobile ; et/ou
le châssis (22) est configuré sous la forme d'un profilé creux ; et/ou
une rainure de mise en prise (28), qui est associée à un dispositif de verrouillage (24), est montée sur le châssis (22) ou intégrée dans celui-ci.

9. Dispositif de table (10) selon l'une quelconque des revendications précédentes, dans lequel :
l'élément mobile (16) est positionné, dans une position de non-utilisation du dispositif de table (10), en bas et/ou du côté du plancher dans le guide vertical (20) ; et/ou
l'élément mobile (16) est supporté ou peut être supporté, dans une position de non-utilisation du dispositif de table (10), sur un plancher de véhicule (32) du véhicule automobile ; et/ou
l'élément mobile (16) est positionné, dans une position d'utilisation du dispositif de table (10), en haut et/ou loin du plancher dans le guide vertical (20) ;
le plateau de table (12), dans une position de non-utilisation du dispositif de table (10), est rabattu dans une orientation essentiellement verticale ou inclinée ; et/ou
le plateau de table (12), dans une position d'utilisation du dispositif de table (10), est rabattu dans une orientation essentiellement horizontale.

10. Dispositif de table (10) selon l'une quelconque des revendications précédentes, présentant en outre :
un dispositif d'amortissement (30), qui est configuré pour :
amortir un impact de l'élément mobile (16) sur un plancher de véhicule (32) du véhicule automobile ; et/ou
soutenir de manière amortissante l'élément mobile (16) et/ou le plateau de table (12) dans une position de non-utilisation du dispositif de table (10) sur un plancher de véhicule (32) du véhicule automobile.

11. Dispositif de table (10) selon la revendication 10, dans lequel :
le dispositif d'amortissement (30) est monté sur l'élément mobile (16), de préférence en bas de l'élément mobile (16) et/ou sur un côté inférieur de l'élément mobile (16) ; et/ou
le dispositif d'amortissement (40) est configuré sous la forme d'un élément élastique, de préférence sous la forme d'un profilé en caoutchouc à chambre creuse.

12. Dispositif de table (10) selon l'une quelconque des revendications précédentes, dans lequel :
le plateau de table (12) présente un élément de préhension (12A), de préférence une cavité de préhension, de préférence sur un côté inférieur du plateau de table (12) et/ou sur un côté du plateau de table (12) opposé à l'élément mobile (16) ; et/ou
le plateau de table (12) est monté de manière rabattable sur l'élément mobile (16) au moyen d'un dispositif de rabattement (14), de préférence un dispositif de rabattement à 90°.

13. Véhicule automobile, de préférence véhicule utilitaire, présentant :
un dispositif de table (10) selon l'une quelconque des revendications précédentes, dans lequel, de préférence, le dispositif de table (10) est fixé dans un espace intérieur du véhicule automobile à un plancher de véhicule (32) du véhicule automobile et/ou à une paroi latérale de véhicule du véhicule automobile.
